(19) Europäisches Patentamt
European Patent Office
Office européen des brevets

(11) **EP 3 034 998 A1**

(12) **EUROPEAN PATENT APPLICATION**
published in accordance with Art. 153(4) EPC

(43) Date of publication:
**22.06.2016 Bulletin 2016/25**

(51) Int Cl.:
***G01C 21/08*** (2006.01)

(21) Application number: **14835947.4**

(22) Date of filing: **12.08.2014**

(86) International application number:
**PCT/CN2014/084163**

(87) International publication number:
**WO 2015/021903 (19.02.2015 Gazette 2015/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.08.2013 CN 201310350209**

(71) Applicant: **Chigoo Interactive Technology Co., Ltd.**
**Jiangsu Province (CN)**

(72) Inventors:
• **LU, Xiaohuan**
  **Wuxi**
  **Jiangsu 214028 (CN)**

• **WANG, Xinheng**
  **Wuxi**
  **Jiangsu 214028 (CN)**
• **JIA, Shangjie**
  **Wuxi**
  **Jiangsu 214028 (CN)**

(74) Representative: **Hautier IP**
  **1, Rue du Gabian**
  **Le Thalès - 12 Etg - Bloc A**
  **98000 Monaco (MC)**

(54) **TARGET POSITIONING METHOD AND SYSTEM**

(57) A method and system for locating an object are disclosed. The method comprises generating a plurality of sampling points in an activity area map for an object; obtaining a conditional probability density of the object's locating at the plurality of sampling points according to an initial electromagnetic field intensity of the plurality of sampling points and a current electromagnetic field intensity of the object to be located; conducting resampling and updating for the sampling points according to the conditional probability density; and determining a position of the object to be located based on coordinate values of sampling points after the updating. The present invention can improve the accuracy of the locating or tracking on an indoor object.

```
┌────────────────────────────────────────┐
│ obtaining an indoor initial magnetic    │──S101
│ field map                               │
└────────────────────────────────────────┘
                   │
                   ▼
┌────────────────────────────────────────┐
│ generating sampling points              │──S102
└────────────────────────────────────────┘
                   │
                   ▼
┌────────────────────────────────────────┐
│ obtaining a conditional probability     │──S103
│ density of the sampling point           │
└────────────────────────────────────────┘
                   │
                   ▼
┌────────────────────────────────────────┐
│ resampling and updating the sampling    │──S104
│ point                                   │
└────────────────────────────────────────┘
                   │
                   ▼
┌────────────────────────────────────────┐
│ locating an object to be determined     │──S105
│ based on the sampling point             │
└────────────────────────────────────────┘
```

Fig. 1

**Description**

FIELD OF TECHNOLOGY

The present invention relates to indoor location and simulation, and particularly to a method and system for locating an object.

BACKGROUND

Indoor locating technology is a technology that obtains indoor position information of people and objects. Based on the position information, a variety of services can be provided to users, which have broad application prospects in the military and civilian fields. Conventional indoor locating methods involve infrared indoor positioning, ultrasonic positioning, Bluetooth, radio frequency identification and wireless sensor network, etc. Since implementation of the above locating technologies relies on collection of various types of wireless information, when heavy wireless information interference exists in a detecting environment and the situation is complex, those conventional indoor locating methods will not work normally, thus affecting the locating of an object.

SUMMARY OF THE INVENTION

In view of the above deficiencies in the prior art, in accordance with one aspect of the present invention, a method for locating an object is provided, which determines a probability of an object's locating at a sampled position by measuring the current electromagnetic field so as to obtain the current position of the object.

A method for locating an object according to one aspect of the present invention comprises: generating a plurality of sampling points in an activity area map for an object; obtaining a conditional probability density of the object's locating at the plurality of sampling points according to an initial electromagnetic field intensity of the plurality of sampling points and a current electromagnetic field intensity of the object to be located; conducting resampling and updating for the sampling points according to the conditional probability density; and determining a position of the object to be located based on coordinate values of sampling points after the updating.

In some embodiments, said obtaining a conditional probability density of an object's locating at the plurality of sampling points may comprise a step of updating initial coordinates of the plurality of sampling points according to a Monte Carlo action model, and a step of obtaining a conditional probability density of the object's locating at the plurality of sample points by means of Monte Carlo measuring model according to the initial electromagnetic field intensity of the plurality of sampling points after the updating and the current electromagnetic field intensity.

In some embodiments, the method may further comprise generating the plurality of sampling points with random function in the activity area map of the object.

In some embodiments, said generating a plurality of sampling points in an activity area map of the object may comprise a step of generating the plurality of sampling points in the activity area map of the object according to information of historical sampling points by means of BSAS algorithm.

In some embodiments, said generating the plurality of sampling points according to information of historical sampling points by means of BSAS algorithm may comprise a step of establishing an initial cluster m = 1, $C_m = \{X_m\}$; a step of setting threshold $\theta$ according to Euler distance $d(x_{(i)}, C_k) = \min_{1 \leq j \leq m} d(x_{(i)}, C_j)$ between any two historical sampling points; a step of determining in sequence whether the multiple historical sampling points belong to an initial cluster $C_k$ $= C_k \cup \{x_{(i)}\}$ according to the threshold $\theta$ and reference sampling points, if yes then joining the multiple historical sampling points into the initial cluster, and if not then establishing a new cluster m = m + 1, $C_m = \{X_{(i)}\}$; a step of extracting the sampling points of the cluster according to a set number of cluster particles if the number of sampling points of the cluster is greater than the set number of cluster particles; and a step of determining the sampling points of the cluster as a plurality of sampling points.

In some embodiments, said updating initial coordinates of the plurality of sampling points by means of the Monte Carlo action model may comprise a step of updating two-dimensional initial coordinates of the plurality of sampling points by means of the Monte Carlo action model $(x_t, y_t)^{(n)} = (x_{t-1}, y_{t-1})^{(n)} + w(\theta^{(n)})$

In some embodiments, said obtaining a conditional probability density of the object's locating at the plurality of sample points by means of Monte Carlo measuring model according to the initial electromagnetic field intensity of the plurality of sampling points after the updating and the current electromagnetic field intensity may comprise: for each sampling point, adding a current magnetic field intensity value $z_t$ into the Monte Carlo measuring model

$$m_t^{(n)} = m_{t-1}^{(n)} p(z_t \mid (x_t, y_t)^{(n)})$$ to obtain a conditional probability value $m_t^i = p(z_t \mid s_t^i)$ of each sampling point.

In some embodiments, said conducting resampling and updating for the sampling points according to the conditional probability density may comprise a step of conducting resampling and updating of the sampling points by using a random sampling function to obtain the current sampling point according to the set times of sampling and the conditional probability density of the sampling point.

In some embodiments, said determining a position of the object to be located based on coordinate values of the updated sampling points may comprise: determining a position of the object to be located in accordance with the coordinate values, or in accordance with two-dimensional coordinate values of the updated sampling point and the corresponding conditional probability density m with formula $(x, y)_{estimate} = \sum\limits_{n=0}^{N} m^{(n)}(x, y)^{(n)}$.

The above method can improve accuracy of indoor positioning which may otherwise be affected by environment as in the above-mentioned prior art.

According to another aspect of the present invention, a system for locating an object comprises: a sampling point generating module configured to generate a plurality of sampling points in an activity area map of an object to be located, a conditional probability density obtaining module configured to obtain a conditional probability density of the object's locating at the plurality of sampling points according to initial electromagnetic field intensity of the plurality of sampling points and a current electromagnetic field intensity of the object; a resampling module configured to conduct resampling and updating of the sampling points according to the conditional probability density, and a locating module configured to determine a position of the object based on coordinates of the updated sampling points.

In some embodiments, the conditional probability density obtaining module may further comprise a Monte Carlo action model unit configured to update initial coordinates of the plurality of sampling points by means of a Monte Carlo action model, and a Monte Carlo measuring model unit configured to obtain the conditional probability density of the object's locating at the plurality of sample points by means of Monte Carlo measuring model according to initial electromagnetic field intensity of the plurality of updated sampling points and a current electromagnetic field intensity of the object.

In some embodiments, the sampling point generating module may further comprise a sampling point randomly generating unit configured to generate the plurality of sampling points with a random function in the activity area map of the object, and a historical sampling point updating unit configured to generate the plurality of sampling points with BSAS (Basic Sequential Algorithmic Scheme) algorithm according to information of the historical sampling points in the activity area map of the object.

Compared with the prior art, the present invention may have at least the following advantages:

1) The limitation of requirement on the complicated software and hardware can be avoided, and locating of an object can be achieved as long as a plane map and a magnetic field map are available plus a common electromagnetic sensor;

2) The Monte Carlo model being used is simple, flexible, easy to implement, and real-time, and has a more stable performance;

3) The problem of the loss of effective particles in Monte Carlo method can be effectively solved by employing the BSAS clustering method; and

4) No requirement on high performance of computer hardware, thus saving system investment.

BRIEF DESCRIPTION OF THE DRAWINGS

Fig. 1 is a schematic diagram illustrating a method of locating an object according to an embodiment of the present invention;

Fig. 2 shows an indoor magnetic field in initial state according to an embodiment of the present invention;

Fig. 3 shows an indoor plan view in initial state according to an embodiment of the present invention;

Fig. 4 is a plan view showing sampling points which are initially generated according to an embodiment of the present invention;

Fig. 5 is a schematic diagram showing a method of generating sampling points according to an embodiment of the present invention;

Fig. 6 is a schematic diagram showing movements of the sampling points in the plan according to an embodiment of the present invention;

Fig. 7 is a plan view showing the sampling points without a resampling and updating being conducted according to an embodiment of the present invention;

Fig. 8 is a plan view showing the sampling points after resampling and updating according to an embodiment of the present invention; and

Fig. 9 is a block diagram of a system for locating an object based on the electromagnetic field according to an embodiment of the present invention.

DETAILED DESCRIPTION

The present invention will be further described in detail by referring to some embodiments thereof in conjunction with the accompanying drawings as follows.

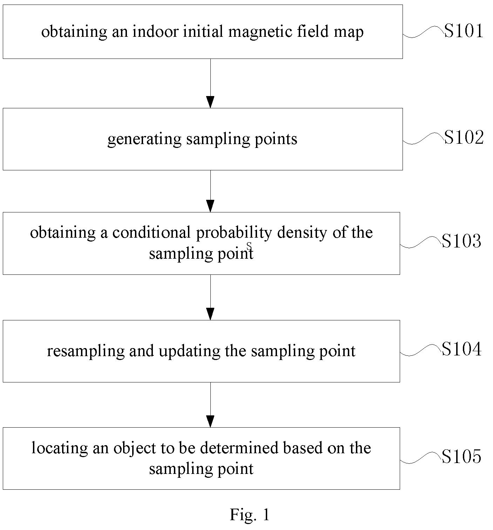

Fig. 1 is a schematic diagram showing a method of locating an object according to one embodiment of the present invention. As shown in Fig. 1, the method for locating an object, comprising:

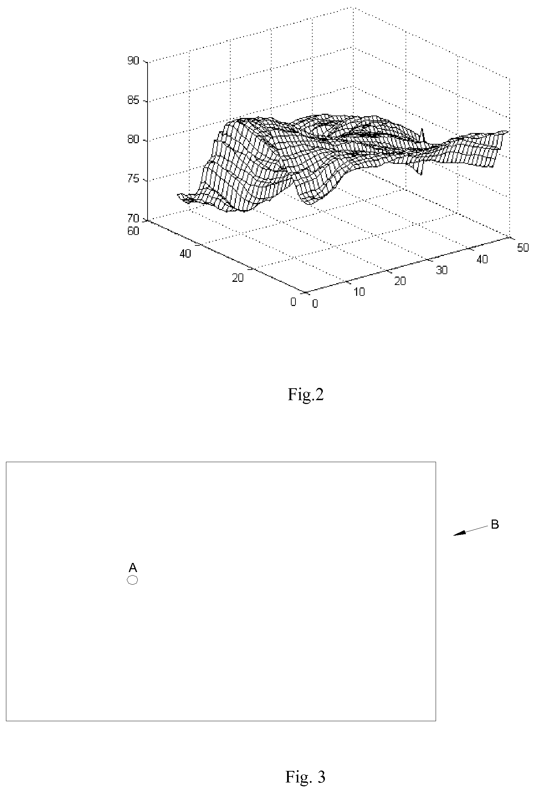

Step S101: Performing a field measurement in a room where the object to be positioned locates to get an indoor floor plan. When the object to be located is not in the room, an indoor initial magnetic field map can be obtained by measuring the initial magnetic field of the room with a magnetometer. Fig. 2 is an indoor floor plan of the room in initial state according to an embodiment of the present invention, in which object "A" is an object to be located, an indoor activity area of object "A" is within the boundary "B". When the target "A" is not within the boundary "B", an initial magnetic map of the area within "B" boundary is obtained as shown in Fig. 3 by measuring the magnetic field of each point within the boundary "B" using a magnetometer.

Step S102: generating a plurality of sampling points uniformly on the indoor floor plan obtained at step S101 (as shown in Fig. 2). Depending on different phase of locating the object (i.e., at an initial state of locating or a tracking state), sampling points can be generated on the interior floor plan (i.e., Fig. 2) by employing the following different methods.

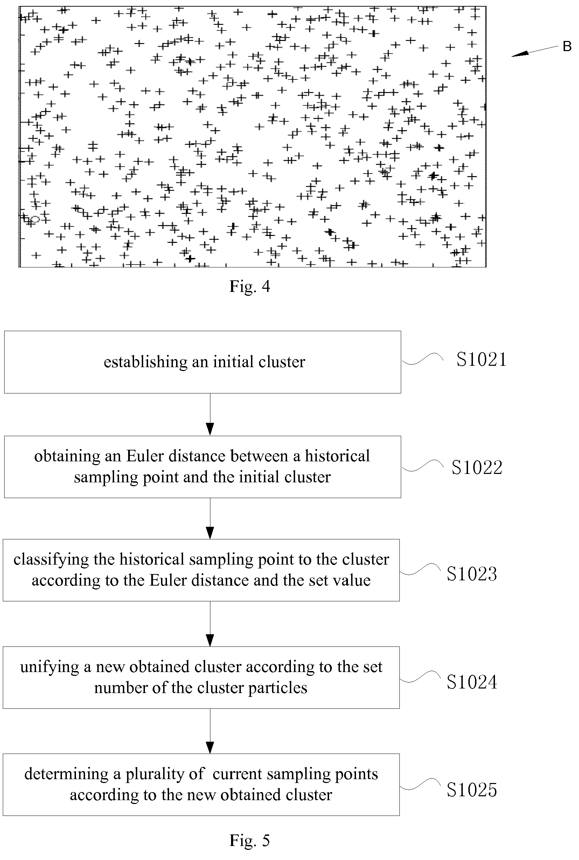

If the current state is the initial locating state, that is, there is no historical sampling points for reference, a matrix of sampling points consists of random numbers having "uniform distribution" or other probability distribution can be generated respectively in x, y direction by employing rand () function. For example, n sampling points may be randomly generated on the indoor floor plan (Fig. 2). Fig. 4 shows a plan view of the sampling points which are initially generated according to an embodiment of the present invention.

Taking into account the continuity of object tracking, if the current state is tracking state (tracking state is a locating state in which a continually locating and tracking on the object to be located is performed), that is, historical sampling points have been generated during the previous tracking step (or previous tracking period), then the BSAS algorithm can be used for initializing and updating the historical sampling points, as shown in Fig. 5. The method comprises the following steps:

Step S1021: extracting historical sampling points according to the set threshold $\theta$ to establish an initial cluster m = 1, $C_m = \{X_m\}$. For example, assuming that the threshold $\theta$ is set to 2m and the existing historical clusters comprise four historical sampling points which are A1, A2, A3 and A4, and the initial cluster 1 is formed with A1 and A4 with the distance between A1 and A4 is 2m.

Step S1022: calculating in turn a current Euler distance between each of a plurality of historical sampling points extracted in step S1021 and the initial cluster by using a formula $d(x_{(i)}, C_k) = \min_{1 \leq j \leq m} d(x_{(i)}, C_j)$. For example, there are three historical sampling points A1, A2 and A3 in total in the initial cluster in which the Euler distance between the initial cluster 1 and A2 is 3m and the Euler distance between the initial cluster 1 and A3 is 1m.

Step S1023: determining whether an Euler distance between each historical sampling point and the initial cluster is less than a threshold $\theta$. If so, joining the sampling point into the initial cluster, and if not, establishing a new cluster m=m+1, $C_m = \{X_{(i)}\}$. Considering the example shown in step S1022, the sampling point A1 is set as a reference when the threshold $\theta$ is 2m. Since the Euler distance between the initial cluster 1 and A3 is 1m, which is less than the threshold 2m, the historical sampling point A3 can be classified into the initial cluster 1. The Euler distance between the initial cluster 1 and A2 is 3m, which is larger than the threshold 2m, so the historical sampling point A2 cannot be classified into the initial cluster, hence cluster 2 can be created.

Step S1024: Where the number of sampling points in one of the clusters is larger than the set number of cluster's particles n after classifying all sampling points into clusters, p particles from the cluster are selected to represent the cluster and the remaining n-p particles are re-initialized. The re-initialization process is the same as the process of randomly generating n-p sampling points distributed evenly on the indoor floor plan by using function of rand in the initial locating.

For example, assuming a cluster having 80 historical sampling points has been generated. First, an initial cluster 1 is set in advance. Then, an Euler distance between the cluster and each of known historical sampling points is obtained. The threshold $\theta$ is set to 2 ~ 3m or other value according to a precision requirements. Thereafter, according to the threshold of 2 ~ 3m, each historical sampling point of the cluster is subject to a judging. For example, a distance between the historical sampling point and the initial point is 1m, which is within the threshold $\theta$, and the point is classified into the initial cluster 1. If the comparison between the historical sampling point and the initial point is 4m, which exceeds the threshold $\theta$, then a new cluster 2 is generated. Such a judgment is carried out in turn. For example, assuming four clusters have been created based on the historical sampling points clusters, cluster 1 (with 10 sampling points), cluster 2 (with 40 sampling points), cluster 3 (with 20 sampling points) and cluster 4 (with 10 sampling points). Since cluster 2 with 40 sampling points exceeds a set value 30, 30 particles are selected from cluster 2 to represent cluster 2 and the remaining 10 sampling points are re-classified into other clusters.

Step S1025: The sampling points determined in the above step of S1024 in all clusters are determined as the current sampling point (the number is more than one).

In the above embodiment, information about the degree of convergence of the particle is firstly obtained, and then the number of particles representing the region is determined. A certain percentage of the particles are intensively selected from the old set of particles and then reinitialized. In such a manner described above, lost of effective particle can be effectively avoided, thus improving success rate of locating.

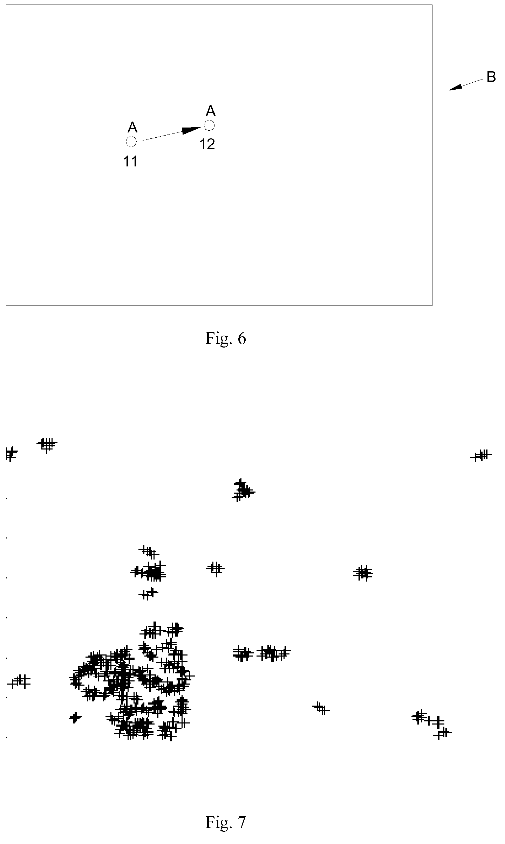

Step S103: First, the initial coordinates of 80 sampling points generated in step S102 is updated by using a Monte Carlo action model. The Monte Carlo action model used here may be expressed as: $(x_t, y_t)^{(n)} = (x_{t-1}, y_{t-1})^{(n)} + w(\theta^{(n)})$, in which $w(\theta^{(n)})$ denotes that a new set of sampling values $s_t^{\prime i}$ can be obtained by updating particle status at any angle with any velocity for each particle $s_{t-1}^{i}$, i.e., the sampling value of the 80 sampling points at new location are obtained. Fig. 6 shows the sampling point moving process on the indoor floor plan. The sampling point A randomly moves from an initial position 11 to a position 12 according to the Monte Carlo action model (one of the random movement positions of the initial position 11 is shown). The advantage for simulating the object to be located by the Monte Carlo action model is that human behavior or robot movements can be simulated more realistic to allow a more accurate location for the object. The probability density corresponding to a sampling point after moving is $p(X_t|Z^{t-1})$, in which the probability $p(X_t|Z^{t-1})$ can be obtained based on a posterior probability $p(X_{t-1}|Z^{t-1})$ from the last round of iteration by using a motion model $p(X_t|X_{t-1}, u_{t-1})$. For example, as for a sampling point S1, it's position is updated by respectively summing the current position x, y according to the formula $(x_t, y_t)^{(n)} = (x_{t-1}, y_{t-1})^{(n)} + w(\theta^{(n)})$, in which θ is a current direction angle which is randomly generated. After that, a current magnetic field intensity value of the object to be located in the room, that is, a measurement value $Z^t$, is obtained by a magnetometer. The conditional probability density of the measurement value $Z^t$ when the object is in the state $X_t$ is represented by using the measurement model $p(z_t|X_t)$. For each sampling point $s_t^{\prime i}$, a weight $m_t^{i} = p(z_t | s_t^{\prime i})$ of each particle (i.e., the conditional probability density) can be calculated through substituting the measured data Zt into the measurement model $m_t^{(n)} = m_{t-1}^{(n)} p(z_t | (x_t, y_t)^{(n)})$, the conditional probability density representing the probability of the sampling point at that position. It can be specifically calculated with Gaussian process which can be represented by the equation: $p(z|x,y) = \dfrac{1}{(2\pi)^{N/2} |R|^{1/2}} \exp(-\dfrac{1}{2}(z - h_{map}(x,y))^T R^{-1}(z - h_{map}(x,y)))$, here hmap is the value of initial magnetic field map. For example, as for the sampling point s1, the magnetic field value $h_{map}(x,y)$ can be obtained by searching the magnetic field map according to the position coordinate, and the measurement value of the current object to be located is z, whereby the conditional probability density of the sampling point s1 can be obtained by using the Gaussian equation p (z | x, y) described above, which is the current weight value of sample point s1. At the next moment, the position coordinates of the sampling point s1 through motion model will change. Accordingly, magnetic field values also follow the change and the current weight value is obtained by re-using the Gaussian formula according to the measurement value z of current object to be located. According to the formula $m_t^{(n)} = m_{t-1}^{(n)} p(z_t | (x_t, y_t)^{(n)})$, the weight value (i.e., the conditional probability density) of s1 by multiplying the current weight value with the weight value at the last moment. Finally the conditional probability density of each sampling point can be obtained by repeating the above steps.

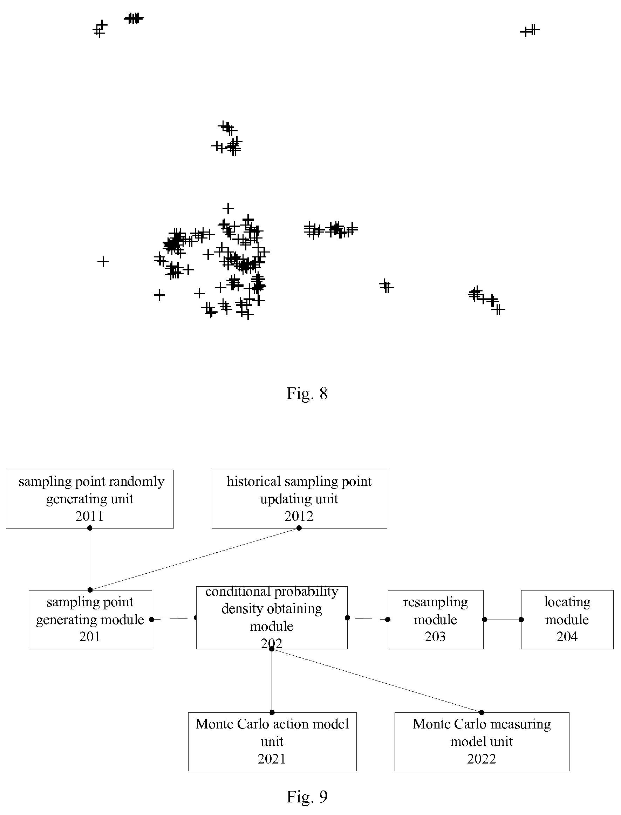

Step S104: conduct a resampling on each sampling point by using random sampling function according to a set sampling frequency and a conditional probability density. As for random sampling function, randsample() function selected from matlab software can be used. The current sampling point is obtained after screening. As shown in Fig. 7, assuming there are 500 sampling points s1-s500, each sampling point has a corresponding normalized weight value. These 500 sampling points are subject to a resampling by employing a function randsample, the weight value of each point determines the probability of the point being sampled. Such sampling will be executed 500 times, and the greater the weight value, the larger probability of being sampled. After resampling, the distribution of 500 sampling points will be changed. A result of resampling is shown in Fig. 8.

Step S105: According to the two-dimensional coordinate values of the current sampling point updated in step S104, the position of the object to be located on the indoor floor plan can be determined directly. As for the sampling points shown in Fig. 8, the central region of a dense position of the sampling object can be identified as the position of the object to be located.

In addition, the two-dimensional coordinates of the current object can be obtained by combining the conditional probability density m corresponding to each sampling point and using formula $(x,y)_{estimate} = \sum\limits_{n=0}^{N} m^{(n)}(x,y)^{(n)}$, so that the location of the object is more accurate.

It can be seen that the above technical solutions avoid limitation of requirements on complicated software and hardware and the location can be achieved as long as a flat map and a magnetic field map are available plus a conventional electromagnetic sensor. The Monte Carlo model that used in the present invention is simple, flexible, easy to implement, and real-time, with more stable performance. The lost of effective particles in Monte Carlo method can be avoided by employing the BSAS clustering method. The method of the present invention has low requirements on computer hardware. In the case of large amount data map, the dynamic map method can be used to dynamically divide the map to ensure that the running time is within the acceptable range.

Meanwhile, as shown in Fig. 9, a system 20 for locating an object is also provided in an embodiment of the present invention, comprising:

a sampling point generating module 201 configured to generate a plurality of sampling points in a activity area map of the object; a conditional probability density obtaining module 202 configured to obtain a conditional probability density of the object's locating at the plurality of sampling points according to initial electromagnetic field intensity of the plurality of sampling points and a current electromagnetic field intensity of the object; a resampling module 203 configured to conduct resampling and updating of the sampling points according to the conditional probability density, and a locating module 204 configured to determine a position of the object based on coordinates of the updated sampling points.. Specifically, the locating module 204 may conduct the following steps: obtaining a position of the object to be located in accordance with a two-dimensional coordinate of the updated sampling point, or obtaining a position of the object to be located in accordance with a two-dimensional coordinate of the updated sampling point and a corresponding conditional probability density m by using the formula

$$(x,y)_{estimate} = \sum\limits_{n=0}^{N} m^{(n)}(x,y)^{(n)}.$$

The conditional probability density obtaining module 202 may further comprise: a Monte Carlo action model unit 2021 configured to update initial coordinates of the plurality of sampling points according to the Monte Carlo action model $(x_t,y_t)^{(n)} = (x_{t-1},y_{t-1})^{(n)} + w(\theta^{(n)})$; a Monte Carlo measuring model unit 2022 configured to obtain the conditional probability density of the object's locating at the plurality of sample points by Monte Carlo measuring model, according to initial electromagnetic field intensity of the plurality of sampling points after updating and the current electromagnetic field intensity of the object to be located. A specific process of the Monte Carlo measuring model unit 2022 may comprise, for each sampling point, substituting a current magnetic field intensity value $z_t$ into the Monte Carlo measuring model $m_t^{(n)} = m_{t-1}^{(n)} p(z_t | (x_t,y_t)^{(n)})$ to obtain a conditional probability value $m_t^i = p(z_t | s_t^{\prime i})$ of each sampling point.

The sampling point generating module 201 comprises: a sampling point randomly generating unit 2011 configured to generate the plurality of sampling points with a random function in the activity area map of the object, and a historical sampling point updating unit 2012 configured to generate the plurality of sampling points according to information of historical sampling points and BSAS algorithm in the activity area map of the object. A process may comprise: establishing an initial cluster m = 1, $C_m = \{X_m\}$ according to a set threshold $\theta$; determining whether an Euler distance $d(x_{(i)},C_k) = \min_{1 \leq j \leq m} d(x_{(i)},C_j)$ between the historical sampling point and the initial cluster is less than the set threshold $\theta$, and if so, joining the historical sampling point into the initial cluster, or if not, establishing a new cluster m = m + 1, Cm = {X (i)}; extracting the sampling points of the cluster according to the number of setting cluster particles if the number of sampling points of the cluster is greater than the number of setting cluster particles; and determining the sampling points of the cluster as a plurality of sampling points.

Specific operations of the system have been described in detail as above mentioned, and thus a detailed description thereof is omitted.

The above are only some embodiments of the present invention. Those of ordinary skilled in the art will appreciate that a number of modifications and improvements to the present invention can also be made without departing from the idea of the invention, all of which are contained within the protection scope of the present invention.

**Claims**

1. A method for locating an object, comprising:

   generating a plurality of sampling points in an activity area map for an object to be located;
   obtaining a conditional probability density of the object's locating at the plurality of sampling points according to an initial electromagnetic field intensity of the plurality of sampling points and a current electromagnetic field intensity of the object to be located;
   conducting resampling and updating for the sampling points according to the conditional probability density; and
   determining a position of the object to be located based on coordinate values of sampling points after the updating.

2. The method of claim 1, wherein said obtaining a conditional probability density of an object's locating at the plurality of sampling points comprises:

   updating initial coordinates of the plurality of sampling points according to a Monte Carlo action model, and obtaining a conditional probability density of the object's locating at the plurality of sample points by means of Monte Carlo measuring model according to the initial electromagnetic field intensity of the plurality of sampling points after the updating and the current electromagnetic field intensity.

3. The method of claim 1 or 2, wherein in the activity area map of the object, the plurality of sampling points are generated with random function.

4. The method of claim 1, wherein said generating a plurality of sampling points in an activity area map of the object comprises:

   generating the plurality of sampling points in the activity area map of the object according to information of historical sampling points by means of BSAS algorithm.

5. The method of claim 4, wherein said generating the plurality of sampling points according to information of historical sampling points by means of BSAS algorithm comprises:

   establishing an initial cluster m = 1, Cm = {Xm} according to a set threshold $\theta$;
   judging whether an Euler distance $d(x_{(i)}, C_k) = \min_{1 \leq j \leq m} d(x_{(i)}, C_j)$ between said historical sampling point and said initial cluster is less than the threshold $\theta$, and if yes then joining the multiple historical sampling points into the initial cluster, or if not then establishing a new cluster m = m + 1, Cm = {X (i)};
   extracting the sampling points of the cluster according to a set number of cluster particles if the number of sampling points of the cluster is greater than the set number of cluster particles; and
   determining the sampling points of the cluster as a plurality of sampling points.

6. The method of claim 2, wherein said updating initial coordinates of the plurality of sampling points based on the Monte Carlo action model comprises:

   updating two-dimensional initial coordinates of the plurality of sample points by using the Monte Carlo action model.

7. The method of claim 2, wherein said obtaining a conditional probability density of the object's locating at the plurality of sample points comprises: for each sampling point, adding a current magnetic field intensity value $z_t$ into the Monte Carlo measuring model $m_t^{(n)} = m_{t-1}^{(n)} p(z_t \mid (x_t, y_t)^{(n)})$ to obtain a conditional probability value $m_t^i = p(z_t \mid s_t^{\prime i})$ of each sampling point.

8. The method of claim 1, wherein said conducting resampling and updating for the sampling points according to the conditional probability density comprise:

   conducting resampling and updating of the sampling points by using a random sampling function to obtain the current sampling point according to the set times of sampling and the conditional probability density of the sampling point..

9. The method of claim 1, wherein said determining a position of the object to be located based on coordinate values of the updated sampling points comprises:

determining a position of the object to be located in accordance with the coordinate values, or
determining a position of the object to be located in accordance with two-dimensional coordinate values of the updated sampling point and the corresponding conditional probability density m with formula

$$(x,y)_{estimate} = \sum_{n=0}^{N} m^{(n)}(x,y)^{(n)}$$ .

10. A system for locating an object, comprising:

a sampling point generating module configured to generate a plurality of sampling points in an activity area map of an object to be located,
a conditional probability density obtaining module configured to obtain a conditional probability density of the object's locating at the plurality of sampling points according to initial electromagnetic field intensity of the plurality of sampling points and a current electromagnetic field intensity of the object;
a resampling module configured to conduct resampling and updating for the sampling points according to the conditional probability density, and
a locating module configured to determine a position of the object based on coordinates of the updated sampling points.

11. The system of claim 10, wherein the conditional probability density obtaining module comprises:

a Monte Carlo action model unit configured to update initial coordinates of the plurality of sampling points by means of a Monte Carlo action model, and
a Monte Carlo measuring model unit configured to obtain the conditional probability density of the object's locating at the plurality of sample points by means of Monte Carlo measuring model according to initial electromagnetic field intensity of the plurality of updated sampling points and a current electromagnetic field intensity of the object.

12. The system of claim 10, wherein the sampling point generating module comprises:

a sampling point randomly generating unit configured to generate the plurality of sampling points with a random function in the activity area map of the object, and
a historical sampling point updating unit configured to generate the plurality of sampling points with BSAS algorithm according to information of the historical sampling points in the activity area map of the object.

obtaining an indoor initial magnetic field map — S101

generating sampling points — S102

obtaining a conditional probability density of the sampling point — S103

resampling and updating the sampling point — S104

locating an object to be determined based on the sampling point — S105

Fig. 1

Fig.2

Fig. 3

Fig. 4

| establishing an initial cluster | S1021 |

| obtaining an Euler distance between a historical sampling point and the initial cluster | S1022 |

| classifying the historical sampling point to the cluster according to the Euler distance and the set value | S1023 |

| unifying a new obtained cluster according to the set number of the cluster particles | S1024 |

| determining a plurality of current sampling points according to the new obtained cluster | S1025 |

Fig. 5

Fig. 6

Fig. 7

Fig. 8

| sampling point randomly generating unit 2011 | historical sampling point updating unit 2012 |
|---|---|

| sampling point generating module 201 | conditional probability density obtaining module 202 | resampling module 203 | locating module 204 |
|---|---|---|---|

| Monte Carlo action model unit 2021 | Monte Carlo measuring model unit 2022 |
|---|---|

Fig. 9

# INTERNATIONAL SEARCH REPORT

| International application No. |
| --- |
| PCT/CN2014/084163 |

**A. CLASSIFICATION OF SUBJECT MATTER**

G01C 21/08 (2006.01) i

According to International Patent Classification (IPC) or to both national classification and IPC

**B. FIELDS SEARCHED**

Minimum documentation searched (classification system followed by classification symbols)

G01C; G01B

Documentation searched other than minimum documentation to the extent that such documents are included in the fields searched

Electronic data base consulted during the international search (name of data base and, where practicable, search terms used)

CNKI, CNPAT, WPI, EPODOC: magnetic field, magnetic field strength, sensor, repeat, electromagnetic field intensity, conditional probability density, electromagnetic sensor, graph, position+, resample+, magnetic, conditional, sampl+, intensity, coordinate, locat+

**C. DOCUMENTS CONSIDERED TO BE RELEVANT**

| Category* | Citation of document, with indication, where appropriate, of the relevant passages | Relevant to claim No. |
| --- | --- | --- |
| X | CN 103175529 A (MEDIASOC TECHNOLOGIES CO., LTD.) 26 June 2013 (26.06.2013) description, paragraphs [0037]-[0051] and figures 1-6 | 1-4, 8-12 |
| A | CN 101476860 A (INSTITUTE OF ELECTRICIAN, CHINESE ACADEMY OF SCIENCES) 08 July 2009 (08.07.2009) the whole document | 1-12 |
| A | CN 101556154 A (MEMSIC (WUXI) INC.) 14 October 2009 (14.10.2009) the whole document | 1-12 |

☐ Further documents are listed in the continuation of Box C.　　☒ See patent family annex.

| | |
| --- | --- |
| *　　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"document member of the same patent family |

| Date of the actual completion of the international search | Date of mailing of the international search report |
| --- | --- |
| 11 October 2014 | 18 November 2014 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer HU, Ruixian Telephone No. (86-10) 61648249 |
| --- | --- |

Form PCT/ISA /210 (second sheet) (July 2009)

**INTERNATIONAL SEARCH REPORT**
Information on patent family members

International application No.

PCT/CN2014/084163

| Patent Documents referred in the Report | Publication Date | Patent Family | Publication Date |
|---|---|---|---|
| CN 103175529 A | 26 June 2013 | None | |
| CN 101476860 A | 08 July 2009 | CN 101476860 B | 20 July 2011 |
| CN 101556154 A | 14 October 2009 | CN 101556154 B | 21 August 2013 |

Form PCT/ISA /210 (patent family annex) (July 2009)